# EUROPEAN PATENT SPECIFICATION

(11) **EP 2 652 738 B1**
(45) Date of publication and mention of the grant of the patent: **17.08.2016**
(21) Application number: 11802622.8
(22) Date of filing: 13.12.2011
(51) Int. Cl.: H04N 5/77, G11B 27/02

(54) **VIDEO EDITING DEVICE FOR DELETING FAILED FRAMES**
VIDEOBEARBEITUNGSVORRICHTUNG ZUM LÖSCHEN VON FEHLGESCHLAGENEN FRAMES
DISPOSITIF D'ÉDITION VIDÉO POUR EFFACER DES TRAMES AVEC ÉCHEC

(30) Priority: 14.12.2010 US 967940
(43) Date of publication of application: 23.10.2013
(73) Proprietor: Qualcomm Incorporated, San Diego CA 92121-1714 (US)
(72) Inventor: PAVAGADA, Deepthi, San Diego California 92121-1714 (US); FORUTANPOUR, Babak, San Diego California 92121-1714 (US); TIVYAN, Roman, San Diego California 92121-1714 (US)
(74) Representative: Howe, Steven
(86) International application number: PCT/US2011/064713
(87) International publication number: WO 2012/082783

(56) References cited:
- US-A1- 2008 165 141
- US-A1- 2009 103 898
- US-A1- 2009 110 372
- US-A1- 2010 091 113
- US-A1- 2010 235 746

## Description

### TECHNICAL FIELD

The disclosure relates to video recording and, more particularly, to techniques for video editing.

### BACKGROUND

Video capturing and processing capabilities can be incorporated into a wide range of devices, including wireless communication devices, personal digital assistants (PDAs), laptop or desktop computers, digital cameras, digital recording devices, cellular or satellite radio telephones, digital media players, and the like.

A video capture device, e.g., a video camera, captures a video stream and sends it to a video encoder for encoding. The video encoder processes the video stream, encodes the processed video stream, and transmits the encoded video data for storage or decoding and display. A user may further edit the captured video to personalize the video to user's preference. During editing, a user may wish to remove portions of the video, add objects such as text and graphics, and change display preferences, and the like. A user often performs edits manually after the video has been captured, encoded, and transferred to a display device.

US2009110372 discloses a video-camera for capturing and editing video content comprising an angular velocity sensor for detecting a rotational angular velocity, wherein the movement is detected based on the detected rotational angular velocity, further comprising content classification means for classifying video or audio corresponding to the detected movement as invalid content when the detected movement is greater than the predetermined value and consequently removing said invalid content.

### SUMMARY

This disclosure describes techniques for automatically editing video during video capture. A video capture device, such as a stand-alone video camera or a computing device incorporating video-capturing capabilities, may analyze video information and sensor information to detect transitions in captured video from a target scene to a non-target scene. The video capture device may mark portions of the captured video corresponding to the detected transition. The marked portions may correspond to interruptions in the captured video due to, for example, the user misplacing or misdirecting the video capture device while capturing a video clip, the launching of another application on the computing device during video capture (e.g., answering an incoming phone call on a mobile phone), or other events that may disrupt capture of video. The video capture device may generate a recommendation for editing the marked portions, e.g., by removing the marked portions, retaining them, or displaying them at a fast playback rate. In one example, the device may display to the user the captured video with the marked frames, and allow the user to select an editing operation for the marked portions. In this manner, automatic detection of possible unintended or undesirable portions of a captured video may promote video quality while reducing the amount of subsequent manual editing required by the user.

In one example, this disclosure describes a method comprising detecting, in a video processing device, a transition of captured video from a target scene to a non-target scene, and marking one or more portions of the captured video for editing based on the detected transition.

In another example, this disclosure describes a device comprising a video processing device that detects a transition of captured video from a target scene to a non-target scene, and at least one processor that marks one or more portions of the captured video for editing based on the detected transition.

In another example, this disclosure describes a device comprising means for detecting, in a video processing device, a transition of captured video from a target scene to a non-target scene, and means for marking one or more portions of the captured video for editing based on the detected transition.

The techniques described in this disclosure may be implemented in hardware, software, firmware, or any combination thereof. If implemented in software, the software may be executed in one or more processors, such as a microprocessor, application specific integrated circuit (ASIC), field programmable gate array (FPGA), or digital signal processor (DSP). The software that executes the techniques may be initially stored in a computer-readable medium and loaded and executed in the processor.

Accordingly, this disclosure also contemplates a computer-readable storage medium comprising instructions that upon execution by a processor in a video processing device to detect a transition of captured video from a target scene to a non-target scene, and mark one or more portions of the captured video for editing based on the detected transition.

The details of one or more aspects of the disclosure are set forth in the accompanying drawings and the description below. Other features, objects, and advantages of the techniques described in this disclosure will be apparent from the description and drawings, and from the claims.

### BRIEF DESCRIPTION OF DRAWINGS

FIG 1 is a block diagram illustrating an exemplary video capture device.
FIG 2 is a block diagram illustrating an exemplary mobile wireless communication device that includes a video capture device.
FIGS. 3A-3C illustrate example screens of a captured video presented to the user, in accordance with this disclosure.
FIG. 4A is a flow diagram illustrating video capturing and display using techniques of this disclosure.
FIG. 4B is a flow diagram illustrating interruption detection using techniques of this disclosure.

### DETAILED DESCRIPTION

This disclosure describes techniques for automatically detecting transitions in captured video and using the detected transitions to identify portions of the captured video for possible editing. The detected transitions may be portions of a captured video where there are interruptions and/or distortions in the captured video. Interruptions may be, example, portions where the captured video changes from a target scene that the user desires to capture to a non-target scene that the user does not intend on capturing. Distortions in captured video may be caused by a quick panning motion or jitter in the captured video due to the user moving a video capture device quickly or with excessive hand motion while capturing the video.

A video capture device, e.g., a camcorder or a video camera built into a computing device, may be used to capture the video. In some examples, the video capture device may reside in a mobile computing device, such as a mobile phone, tablet, personal digital assistant (PDA), or the like. A video processing device, e.g., the video capture device and/or the portable device, may utilize video processing techniques to automatically detect portions of the captured video that a user may want to remove during editing. The detected portions may be, for example, portions where the target scene (e.g., a scene the user intends to capture) changes to an undesirable non-target scene (e.g., a scene the user captures due to misplacement or misdirection of the video capture device relative to the target scene). For example, an undesirable non-target scene may be captured if the user drops the video capture device, places the video capture device on a surface that obstructs the view, e.g., face up or face down relative to the video capture sensor of the device, moves the video capture device in a fast motion or with significant jitter, or the like. In one example, where the video capture device is built into a portable device, the detected portions of the video may be detected based on a functionality of the portable device such as, for example, an incoming voice or video call, a text message, or the launch of any other application, coincident with capture of the video portions, that may interrupt or disrupt video capturing or cause the user to deviate from directing the video capture device at a desired target scene.

The video processing device may mark the detected portions for subsequent editing. The video processing device may automatically edit the marked portions or may alternatively present the marked portion to the user to decide how to edit them. Editing the marked portions may include, for example, deleting the marked portions, displaying the marked portions at a faster playback rate than the rate at which the captured video is displayed, or retaining the marked portions. In this manner, automatic detection and marking of possible distorted or undesirable portions of a captured video may promote video quality while reducing the amount of subsequent manual editing by the user. In particular, the automatically-detected portions may be marked or otherwise identified for convenient consideration by the user for editing purposes. In some examples, where the video capture device detects and edits the distorted or undesirable portions of a captured video, a certain amount of memory on the device may become available for more video capturing or for use by other applications.

Aspects of this disclosure may be utilized in any of a variety of devices that may incorporate video capturing capabilities. For purposes of this discussion, a video camera in a mobile phone is used as an exemplary video capture device. However, it should be understood that aspects of this disclosure may be implemented by a variety of stand-alone video processing devices or systems, or other computing devices and systems that have a video capture component, among other components, such as mobile phones, laptop computers, tablet computers, desktop computers, personal digital assistants, or the like. It should also be understood that for purposes of this discussion "image" may refer to a video image, which may be, for example, a video frame forming part of a sequence of video frames in a movie or video clip.

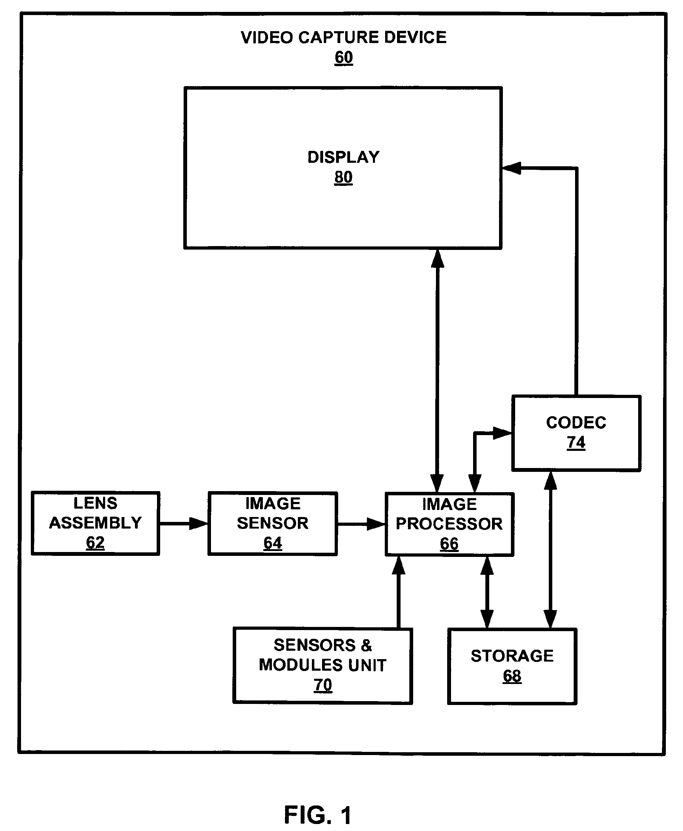

FIG. 1 is a block diagram illustrating an exemplary video capture device 60. Video capture device 60 may comprise, among other components, lens assembly 62, image sensor 64, image processor 66, storage 68, and sensors and modules unit 70, video coded 74, and display 80. Video capture device 60 may be a dedicated video capture device (e.g., camcorder) or may be part of an image capture device (e.g., a digital camera), which may include a combination of a digital video camera and a digital still camera. Video capture device 60 may be a stand-alone device or may form part of another device that incorporates a still or video camera, such as a wireless communication device handset, a mobile device, or the like. In some aspects, video capture device 60 may also include a microphone to capture audio. Image processor 66 may be a video front end (VFE) image processor.

Lens assembly 62 may include one or more lenses and may be controlled by lens actuators that move the lens in lens assembly 62 among a plurality of different lens positions to focus the lens for capturing a scene. In some examples, lens assembly 62 may not be controlled by lens actuators, and may instead adjust focus digitally or in response to user input defining focus locations in the scene being captured.

Image sensor 64 may include image sensor elements such as, for example, a charge coupled device (CCD) array, a photodiode array, or other image sensing device that receives light via the lens and generates image data in response to the received image. Image sensor 64 obtains image information for the scene that video capture device 60 is capturing. Image sensor 64 may also obtain image information for the scene being captured for use in camera functions such as, for example, auto focus, auto white balance, auto exposure, and other image functions which may be used to perform image processing such as, for example, the techniques of this disclosure. In one example, image information may correspond to information related to each frame of the captured video and may include, for example, exposure/brightness data, which may indicate information regarding illumination and luminance characteristics (e.g., pixel luma values).

Image processor 66 processes the obtained image information for each captured frame and stores the frames along with image information in image storage device 68. Image processor 66 may utilize the obtained image information for preliminary and subsequent processing. For example, image processor 66 may determine an average brightness level associated with each frames based on pixel luma values of the frame. Image processor 66 may also receive information from other sensors and modules in video capture device 60, e.g., sensors and modules unit 70. Image processor 66 executes algorithms that implement the techniques of this disclosure, as described in more detail below.

Sensors and modules unit 70 may provide sensor information regarding location, motion, and/or orientation of video capture device 60. The type of sensor information that sensors and modules unit 70 provides may depend on the type of sensors available in video capture device 60. For example, sensors and modules unit 70 may include an accelerometer, a compass, a global positioning system (GPS), barometric pressure sensor, or other modules capable of determining location, orientation, and motion of video capture device 60 during capture of each frame of the captured video. In another example, sensors and modules unit 70 may include a module capable of determining direction of video capture device 60 using audio information received from a microphone or an audio input of video capture device 60. Sensors and modules unit 70 may provide the sensor information it obtains to image processor 66 along with the frames, such that each frame is associated with the corresponding sensor information.

Image processor 66 may comprise one or more processors capable of performing one or more of processing captured frames and performing preliminary image processing. Image processor 66 may provide captured frames and the corresponding information to codec 74, which may perform further image processing such as, encoding images; decoding encoded images for display; and/or transmitting encoded images to another device for decoding and display. Image processor 66 may operate in conjunction with codec 74. Codec 74 and image processor 66 may process and send captured frames to display 80 for display, where display 80 may include video and audio output device, e.g., LCD screen, speakers, and the like.

Video capture device 60 may capture a video, and image processor 66 may perform preliminary image processing on the captured video frames, and store the frames in storage 68. During preliminary processing, image information, e.g., average frame brightness level, may be determined and stored with each corresponding frame. During video capture, sensors and modules unit 70 may also determine additional sensor information such as, for example, motion, location, and orientation associated with video capture device 60 during video capture. Sensors and modules unit 70 may send location, motion, and orientation information to image processor 66 for storage or association with the corresponding frame. For example, an accelerometer may provide data for each frame indicating the position of video capture device 60 relative to predefined axis such that, a movement in any direction is indicated as a vector relative to a starting position (e.g., upright facing away from the user). The vector associated with each frame may be stored with the frame and utilized to determine an amount of change from one frame to another. In one example, image processor 66 may embed the vector information and other image and sensor information in a header for each captured frame. In this example, the image information and sensor information may be encoded with the captured frames. In another example, image processor 66 may create a table of the captured frames, where the table may be populated with corresponding image information (e.g., average frame brightness) and/or sensor information (e.g., location, motion, and/or orientation). In this example, image processor 66 may populate the table with other information corresponding to the captured frames such as, for example, a timestamp, geographical location, and the like. Image processor 66 may increment a frame counter for every captured frame, and may include the counter value as an entry in the table of frame information along with the corresponding frame information. When the captured frames are encoded and transmitted, when applicable, the table of captured frames may be encoded and transmitted with the encoded frames. While the techniques of this disclosure discuss utilizing a table, it should be understood that the information included in the table may be also embedded with the captured frames, for example, in a header of each corresponding frame. In this example, the information may be encoded with the frames and therefore, transmitted in the same bit stream, when applicable.

During video capture, several factors may affect the quality of the captured video, causing moments of interruption, and resulting in distortion or mistargeting of portions of the captured video, relative to a desired target scene to be captured. For example, the user may bring his/her hands up or down such that the video camera is not pointing at the intended scene, but instead to the sky/ceiling or ground/floor. In another example, the user may move the video camera quickly causing a fast blurred motion or jitter in the captured video. In another example, the user may temporarily place the camera on a surface such as, for example, a table, with the video camera capturing either the top of the surface or the sky/ceiling. In another example, the user may drop the video camera during video capture, resulting in temporarily interrupting the scene with undesirable video portions. As another example, when approached by another person, the user may inadvertently pan or tilt the video capture device away from the desired target scene. In addition to the examples above, the user may cause capture of undesirable portions in many other ways.

Image processor 66 may use the image information (e.g., brightness) and the sensor information (e.g., location, motion, orientation, and the like) to detect portions of the captured video that may have interruptions and/or distortions. For example, image processor 66 may detect portions of the captured video where an abrupt change in brightness occurs from one frame to another, portions where the direction of video capture device 60 abruptly changes, and/or portions where there is a fast motion of video capture device. Image processor 66 may then identify, for subsequent editing, frames that correspond to portions of the captured video with interruptions and/or distortions. In detecting the interruption portions in the captured video, image processor 66 may detect a frame where the brightness, for example, abruptly changes from the previous frame, and mark the detected frame as the first frame in the interruption portion. Image processor 66 may then detect a subsequent frame where the brightness changes again, thus marking the end of the interruption portion, and mark the last frame of the portion accordingly.

In one example, image processor 66 may remove during video capturing the video frames that are identified as corresponding to the interruption and/or distortion in the captured video. In this example, image processor 66 may remove the identified frames during video capturing with some delay to allow time to obtain enough information and process the frames to detect a portion of the captured video where interruptions may be present. The delay may allow image processor 66 to determine where the interruption and/or distortion portion of the captured video begins and ends. For example, image processor 66 may mark an abrupt change in brightness of a frame from a previous frame, accompanied by an abrupt change in sensed orientation, as the beginning of an interruption in the captured video, and may mark it for removal. Image processor 66 may then track the average brightness of frames and the sensed orientation to determine when the average brightness of captured frames returns to an average similar to that of frames prior to the detected interruption. The delay provides image processor 66 with sufficient time to mark the starting frame and ending frame of the interruption in the captured video. Image processor 66 may then edit the detected interruption portion of the captured video by deleting the frames marked for removal from the captured video. In this example, image processor 66 may remove the marked frames before any encoding takes place.

In another example, image processor 66 may mark for removal the identified frames to indicate that they correspond to a portion of the captured video where there is an interruption and/or distortion. Codec 74 may then encode the captured frames by encoding the video frames along with information regarding whether the frames correspond to a portion of the captured video where there may be an interruption and/or distortion. For example, codec 74 may encode image information (e.g., brightness) and sensor information (e.g., location, motion, and direction) corresponding to a frame as meta data along with the frame. In another example, codec 74 may encode the table of frame information to send with the captured video, where the table of frame information may include the image information and the sensor information, as described above.

Codec 74 may decode the captured video for playback to the user. Codec 74 may analyze the captured video during the decoding process to determine which frames are marked as corresponding to portions of the captured video where there are interruptions and/or distortions.

In one example, codec 74 may remove the frames marked for removal from the captured video and display the captured video without the interruption and/or distortion on display 80. In another example, codec 74 may send the decoded captured video for display to the user and indicate to the user the frames of the captured video marked as corresponding to an interruption and/or distortion in the captured video. During display, image processor 66 may provide options for the user to select from to determine the course of action to take regarding the marked frames. For example, the user may have an option to delete the marked frames, display the marked frames at a playback rate faster than the playback rate of the captured video, or retain the frames in the captured video. In one example, the user may select the playback speed on a portion-by-portion basis. For example, for longer portions of interrupted video, the user may select to play back the detected interruption portion at a faster rate than a shorter portion. In one example, where the user selects to play back a portion of the captured video at a different playback rate, the timestamp corresponding to the first and last frame of the selected portion may be identified for subsequent use during the decoding and displaying process. The user may edit the video on frame-by-frame basis or on portion-by-portion basis, where each portion is a segment of the video that includes a sequence of frames marked for removal. In one example, where the user indicates a faster playback rate for a selected portion of the captured video, during playback, frames in the selected portion may be skipped during playback to achieve a faster playback rate. For example, in a selected portion, every other frame may be skipped to get the effect of a 2X playback rate.

After the user determines, for each detected portion with interruptions and/or distortion, the course of action, image processor 66 may modify the captured video accordingly, and send the modified video (i.e., the video with the removed or modified interruption portions) to coded 74 for playback on display 80. In particular, if the user selects to delete all or some of the marked frames or portions of the video, image processor 66 may proceed to delete the selected frames, and coded 74 may re-encode the modified video. In this manner, the user may be able to edit the captured video as he/she wishes without having to manually go through the video to identify the problematic portions where there are interruptions in the video. Instead, image processor 66 automatically identifies such portions for review by the user.

In one example, the captured video may be transferred to a separate device for further processing, display, and editing. For example, the user may connect video capture device 60 to another device, e.g., personal computer or a dedicated video editing and display device, which may perform at least a portion of the processing preformed by codec 74. The transferred video may include the captured frames and information regarding the frames marked for removal, e.g., the table of captured frames. The separate device may receive the captured video and the table of captured frames indicating image information and sensor information corresponding to each captured frame. In one example, the separate device may analyze the information, automatically edit the captured video, and process the edited video for display to the user. In another example, the separate device may analyze the information, and display the video to the user with indications of the portions marked for editing to allow the user to determine how to edit the marked portions.

In one example, codec 74 may determine a severity associated with the interruption in the captured video. For example, an interruption that is long or extremely disruptive (e.g., camera is facing down and capturing blank/black video) may be marked as extremely severe, but an interruption that is very short and returns quickly to the target scene may be marked as moderate. The severity may be also encoded with the table of frame information. Codec 74 may have 2 or more levels of severity. In one example, codec 74 may automatically remove frames marked as extremely severe, and may display less severe frames to the user to determine whether or not to remove them. In another example, codec 74 may display the captured video with the frames or portions of video marked for removal with an indication of the level of severity, e.g., text, color, flashing, or the like.

In one example, codec 74 may utilize statistical and historical data to determine whether to mark certain detected interruption portions for removal or to determine the severity of the marked portions. For example, historical data of user's habits in removing or retaining identified frames may be gathered and used to determine likelihood of a user removing an identified frame. The historical data may be based on several factors such as, for example, types of identified frames, lengths of detected portions, location of identified frames within the captured video, the severity associated with the identified frames, the type of interruption (e.g., sudden change in brightness, panning motion, change in direction video capture device is facing, change in orientation, audio level change), and the like. The historical data may represent, for example, the likelihood a user removes a specific type of interruption. In one example, more than one user may utilize video capture device 60 to capture video or the separate device used to display the captured video. In this example, a user may have an associated profile on video capture device 60 or on the separate device, which may have historical data that is user-specific. Therefore, when user A uses video capture device 60, image processor 66 may utilize historical data for user A, which maybe different from historical data for other users, e.g., user B of video capture device 60. For example, historical data may indicate that user A frequently deletes portions of the captured frame that correspond to a fast panning motion, whereas user B displays those portions at a faster playback rate. Therefore, in an example where video capture device 60 automatically edits portions of the captured video marked for removal, fast panning motion portions may be deleted if the associated user is user A, and played at a faster playback rate if the associated user is user B. In another example, if the associated user is user A, fast panning motion portions may be marked with a higher severity level than if the associated user is user B.

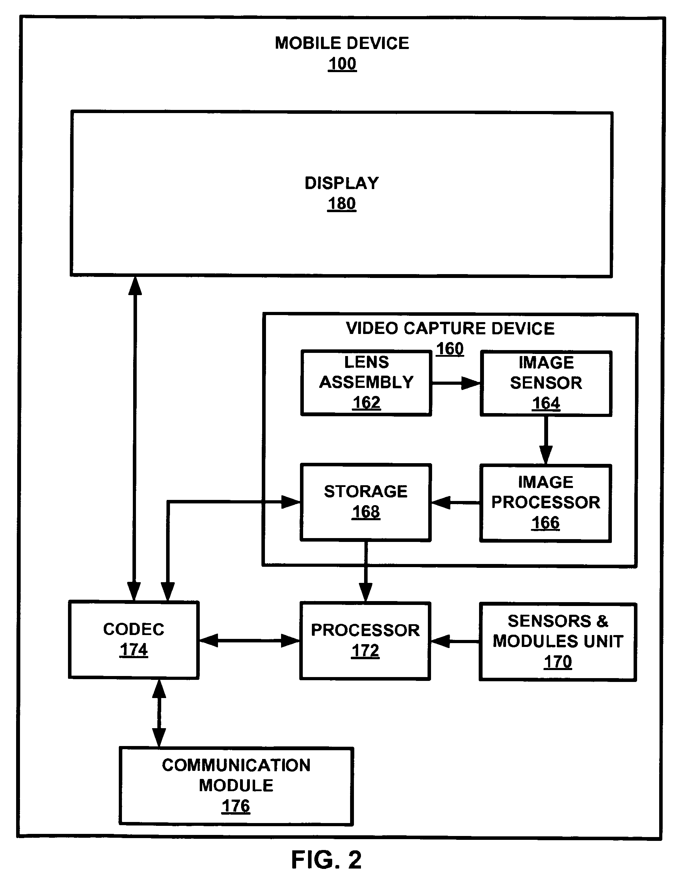

FIG 2 is a block diagram illustrating an exemplary mobile wireless communication device that includes a video capture device. Mobile device 100 may comprise, among other components, video capture device 160, sensors and modules unit 170, processor 172, codec 174, communication module 176, and display 180. Video capture device 160 may be similar to video capture device 60 of FIG. 1, and may comprise, among other components, lens assembly 162, image sensor 164, image processor 166, and image storage 168. Image storage 168 may be a dedicate storage for video capture device 160 or may be a portion of storage associated with mobile device 100. Processor 172 may comprise one or more processors capable of performing one or more of processing captured images; encoding images; decoding encoded images for display; and transmitting encoded images to another device for decoding and display.

A user of mobile device 100 may utilize video capture device 160 to capture a desired video. During video capture, several factors may affect the quality of the captured video causing moments of interruption and/or distortion, resulting in portions of the captured video to be distorted due to events such as those examples discussed above, which cause the user to move or orient the video capture device away from the target scene (i.e., the scene the user intends on capturing) to a non-target scene. In other examples, other applications associated with mobile device 100 may cause interruption in video capturing by video capture device 160. For example, an incoming phone call or text message, or other events that may cause the launch of another application on mobile device 100 may disrupt the video capturing. The disruption may be caused by the launch of the other application, or, in the example of an incoming phone call, the user may wish to pick up the call and hold the phone up to his/her ear, while video capture device 160 continues capturing video, therefore, resulting in orienting video capture device 160 away from the target scene the user is capturing to a non-target scene (e.g., away from user's ear).

Image sensor 164 may perform the same functions as image sensor 64 of FIG. 1, and obtain image information (e.g., pixel luma values) to send to image processor 166. Image processor 166 may utilize the obtained image information for preliminary processing of the captured video, and store the captured video in image storage 168. For example, during preliminary processing, image processor 166 may determine an average brightness level associated with each frame based on pixel luma values of the frame and may store, with each frame of the captured video, the processed image information. Image processor 166 may store the processed image information in a table of captured frames, as described above.

Sensors and modules unit 170 may provide information regarding location, motion and/or orientation of mobile device 100. For example, sensors and modules unit 170 may include an accelerometer, a compass, or other modules capable of determining location, motion, and orientation of mobile device 100 during capture of each frame of the captured video. In another example, sensors and modules unit 170 may include a module capable of determining orientation of mobile device 100 using audio information received from a microphone or an audio input of mobile device 100. Sensors and modules unit 170 may provide the sensor information it obtains to processor 172. Processor 172 may combine the sensor information obtained by sensors and modules unit 170 with corresponding frames in image storage 168, e.g., by updating the table of captured frames. Processor 172 may use the image information and the sensor information to detect portions of the captured video that may correspond to interruptions and or distortions in the captured video. In one example, processor 172 may then mark frames within the detected portions and perform further processing to remove or minimize the distortion caused by the detected interruptions, e.g., delete marked frames from the captured video, or designate a faster playback rate for the marked frames. In another example, processor 172 may mark frames within the detected portions and update the table of captured frames with image information and sensor information to send to codec 174 for further processing, e.g., encoding, editing the marked frames, decoding, and displaying the captured video.

In one example, sensors and modules unit 170 may include an accelerometer, an audio sensor, a compass, and the like, which may provide information regarding location, motion, and/or orientation of mobile device 100. In another example, video capture device 160 and/or mobile device 100 may utilize image processing techniques in addition to the sensors to detect portions of interruption within the captured video, e.g., an abrupt change in brightness from one frame to another.

In an example where the user places the video camera on a surface so that the camera is facing down, the interruption may be detected using the accelerometer motion in the z-axis (or another axis depending on the direction the device faces) and/or image processor 166 processing brightness information received from image sensor sensing a black/dark screen (e.g., an abrupt change in brightness from the previous scene). In an example where the device is facing up, the interruption may be detected by the accelerometer as motion in the z-axis (or other axis depending on the direction the device faces) and/or image processor 166 processing brightness information received from image sensor sensing based on a constant brightness value some period of time where there is no motion over a number of frames (e.g., the camera is pointing to the sky or a ceiling). The interruption in captured video may be determined based on changes in location, motion, and/or orientation, along with image information (e.g., changes in brightness) at a captured frame relative to a previous frame. In these examples, the compass may be also used to determine that video capture device 160 is pointing in a certain direction, which is different relative to a previous direction in which video capture device 160 was pointing, for a certain amount of time that may be perceived as troublesome, which may be an amount of time above a certain threshold. The threshold may be, for example, an amount of time above which a human hand may not be able to hold the device without moving. Additionally, the accelerometer and compass may be used to determine when video capture device 160 and/or mobile device 100 is not facing an intended direction, for example, if the user brings his/her hand down or places the device such that it may be facing a random direction that is not intended for video capture, where a direction may be determined to be random relative to a previous direction that is known or determined to be the correct direction, or if there is a fast panning action beyond a certain threshold. For example, fast panning of the device that keeps the device in the same plane may be perceived as causing a less severe interruption than fast panning of the device in relatively more random directions, which may be perceived as causing a more severe interruption, because it may be more likely that a user caused the fast panning motion in the same plane to capture a different scene, whereas, a random fast panning motion that may be accompanied with tilting of video capture device may indicate a random movement of user's hand.

In another example, video capture device 160 may not have optical video stabilization and may experience extensive hand jitter that may be unpleasant and disruptive in a video. Processor 172 may implement algorithms to detect extensive jitter and shaking by determining what amount of jitter is acceptable based on a threshold value. In yet another example, where another application may be launched causing interruption in the video-capturing (e.g., responding to an incoming call or message), processor 172 may implement an algorithm to determine when an incoming message or call is received and picked up, and may mark the event as an interruption to the video. In this example, processor 172 may also detect the interruption using algorithms that utilize motion and orientation information received from sensors and modules unit 170 corresponding to the user holding mobile device 100 to his/her ear, for example.

Processor 172 may update the table of captured frames with location, orientation, and/or motion information corresponding to sensor information, in addition to image information with which image processor 166 previously updated the table. Based on the sensor information and image information, processor 172 may identify portions of the captured video that may correspond to interruptions and/or distortions in the captured video and mark for removal frames corresponding to the identified portions.

In one example, processor 172 may remove the frames identified as corresponding to the interruption and/or distortion in the captured video, either automatically or in response to user input specifying removal or approving a removal recommendation. In another example, processor 172 may mark the identified frame for subsequent removal during later stages of processing as discussed above. Codec 174 may encode the captured video, including the additional information (e.g., table of captured frames). Codec 174 may then decode the captured video for playback to the user. Codec 174 may automatically remove the marked frames prior to displaying the video or allow the user to select an editing option for portions of the captured video with interruption (e.g., remove the frames, utilize an alternative playback rate, or retain the frames), as described in detail above. In one example, where a user wishes to play back selected portions at a faster playback rate than the normal playback rate, the appropriate number of frames in the selected portions may be skipped to achieve the playback rate. For example, if the user wishes to play back a selected portion at twice the normal playback rate, every other frame in the selected portion may be skipped during playback at the normal playback rate, and as a result, the selected portion appears to be played back at twice the normal playback rate, e.g., 60 frames per second.

Whether processor 172, codec 174, or the user edit the marked portions of the captured video, processor 172 may, in one example, determine a severity level associated with the identified frames, as described above. The selected editing option (e.g., removal, retention, or faster playback) may be based on the level of severity of the interruption and/or distortion, where a portion marked with the highest level of severity may be removed, and a portion marked with a lesser level of severity may be retained or played back at a faster playback rate, for example. When presented to the user, for example, the thumbnails for the frames associated with the interruption portions may be color-coded (e.g., red for frames with the highest level of severity and green for frames with a lower level of severity), presented in a spectrum from least to most severe, or another type of indication may be used as a level of severity guide, e.g., text, numbers, flashing, highlighting, and the like. Processor 172 may update the table of frame information with the severity level associated with frames marked for removal.

Processor 172 may utilize statistical and historical data to determine a course of action and/or severity associated with detected portion of interruption in the captured video. The historical data may be associated with the user's previous editing preferences and selections and may be used to determine what constitutes an interruption from the perspective of the user and what types of interruptions the user has removed from a captured video in the past, as described above.

In one example, an algorithm may keep track of the least severe portions of the captured video that require input from the user to determine whether they should be deleted, and may "learn" patterns associated with certain flagged portions, so that if a user consistently removes certain types of interruptions and/or distortions, the algorithm may subsequently mark them as more severe, and flag them for removal without requiring as much user input. Similarly, if a user consistently retains certain types of interruptions and/or distortions, the algorithm may subsequently ignore similar types of interruptions and not mark them at all. For example, if the user historically removes all interruptions corresponding to an incoming phone call, the algorithm may mark all such interruptions as severe, and may, in the example where processor 172 automatically edits the captured video, remove such interruptions automatically. In this example, processor 172 may determine whether to automatically remove such interruptions based on the number of previous occurrences of the interruptions, where the user removed the interruption, compared to a threshold value. For example, processor 172 may not consider two occurrences where a user removed interruptions corresponding to incoming calls enough historical occurrences to automatically remove such interruptions, but may consider five occurrences enough historical occurrences to automatically determine a course of action with such interruptions. The threshold number of occurrences needed to trigger automatically removing or not removing a certain type of interruption may be set to a default value or may be determined by the user of the system, and may be different for different types of events that cause the interruption. In the example of the interruption caused by an incoming call above, the threshold number may be four. Processor 172 may further determine whether to automatically remove the interruption based on a threshold percentage of the occurrences where the user removed the interruption. For example, the threshold percentage may be 75% of the time, and therefore, if the interruption has previously occurred four times, and the user removed the interruption at least three times, then processor 172 may automatically remove the interruption at the fifth occurrence.

The processing and determination of the interruption portions of a captured video may occur at any one of many stages of a video capturing and processing, as discussed above. In one example, the interruption portions may be detected and marked relatively in real-time, during video capturing. This may be useful in systems with smaller memories, where a video may automatically determine a portion as an interruption and delete the portion when normal video capturing resumes. In another example, the interruption portions may be determined immediately after the video capture is completed and before any further processing. In yet another example, the interruption portions may be determined during decoding of the video using the information in the table of captured frames. In another example, the interruption portions may be determined using the information in the table of captured frames in a separate device dedicated for editing and displaying captured video.

Using techniques of this disclosure may reduce the amount of time a user needs to manually go through the video to identify frames and portions where there are interruptions and/or distortions and determine whether or not to remove them. In one example, techniques of this disclosure may be a feature or a function that the user may activate during video-capturing, where the user may select to have the processor automatically detect and delete portions of interruptions in the captured video. Alternatively, the user may select to enable detection of portions of captured video with interruptions, and then have the user make the determination as to whether to retain or delete the detected portions. The detected interruption portions may be presented to the user (e.g., as thumbnails), where the user may select each detected portion, one at a time, to view, and make a determination regarding removal. The user may also select to remove the identified troublesome portions all at once without reviewing them.

In some examples, the user may select to play back the detected interruption portions a faster playback rate than the normal video rate to maintain a sense of continuity. The user may be able to select whether detected portions are to be deleted or played back at a faster playback rate for all detected portions or on portion-by-portion basis. The user may also be able to determine the rate at which the detected portions are played back, where portions within the same captured video may be played back at different rates. In one example, the faster playback rate may be set by default to a particular rate. In another example, the faster playback rate may be specified by the user during configuration of the video capture device or the video display device.

The features of this disclosure may be implemented using hardware, software, or a combination thereof. The implementation may utilize one or more sensors to determine a change of orientation of the video capture device, to detect extensive jitter or fast panning, or to mark an event that can cause an interruption to a video being captured. Some of these sensors may be, for example, an accelerometer, a compass, a camera image sensor, an audio sensor, a barometric pressure sensor, an ambient light sensor, and the like. As discussed above, the camera image sensor may provide image information such as, for example, brightness information, which may be utilized to determine when an abrupt change of scene occurs using an average frame brightness. A camera image sensor, as noted above, may provide image information such as, for example, brightness, white balance, auto focus, and the like. Abrupt changes in image information may also indicate an interruption, e.g., an abrupt change in average brightness value from one frame to another.

An accelerometer may detect orientation information by determining acceleration information due to gravity. A multi-axial accelerometer may use an initial orientation as a reference and determine amount of change in orientation relative to the initial position. Therefore, when a device is moved from an upright position to a horizontal position, the acceleration in the z-direction may change from a negative value to zero, and the acceleration in the y-direction may change from zero to a positive value, which may indicate an initial upright position and a subsequent horizontal position. For example, an accelerometer may provide data for each frame indicating the position of the video capture device relative to predefined axis such that, a movement in any direction is indicated as a vector relative to a starting position (e.g., upright facing away from the user). For example, the accelerometer may provide a vector of three numbers representing the amount of force in m/s² in the x, y, and z directions. In one example, where the video capture device is on a flat surface, the accelerometer may provide the vector (0, 0, 9.8) for frame captured while in that position, indicating the force of gravity in the z direction, and no force in the x or y directions.

A compass may provide directional information relative to the Earth's magnetic poles. For example, if a user is capturing a video while facing north, then slowly redirects the video capture device to face east, the directional information from the compass for each captured frame may indicate a gradual change from one direction to another. In another example, if the compass provides direction information where the direction changes abruptly (i.e., over a few frames) from north to east, the change may be interpreted as an interruption event, and the frames captured while at the new direction or as long as the direction is changing abruptly from one portion to another may be marked for removal. In one example, the compass may provide directional information as a number between 0 and 360 indicating the amount of degrees from the North direction, where 90 indicates East, 180 indicates South, and 270 indicates West.

An audio sensor may be, for example, a microphone that receives audio input while capturing video. In one example, the audio sensor may be a directional microphone, and using processing techniques, processor 172 may determine a change in direction based on audio input. For example, an audio source may be captured during video capture, and as the user changes the orientation and/or direction of the video capture device, the audio received from the audio source may be analyzed compared to a previous received audio signal to determine the change in orientation and/or direction of the video capture device.

A barometric pressure sensor may utilize pressure measurements to determine altitude and altitude changes. In one example, the altitude and altitude change information from one frame to another may be utilized to determine change in location, where a large change in altitude may indicate a sudden change in location such as, for example, when a user drops the video capture device.

An ambient light sensor may detect the amount of ambient light in the surrounding environment. In one example, a change in detected ambient light from one frame to another may be utilized to determine whether a change in orientation of the video capture device has occurred. An abrupt change in detected ambient light may indicate, for example, that a sudden change in the orientation of a video capture device has occurred such as, for example, when a user places the video capture device face down or drops the video capture device. In one example, an ambient light sensor may provide illuminance data in lux or lumen ranging from 0 to 1000, where 0 indicates dim light, and 1000 indicates bright light.

Additionally, video processing techniques and algorithms may be used to determine the presence of certain events that can cause interruptions in a video. One or more sensors and/or processing techniques may be used together to further increase the reliability of the identification process.

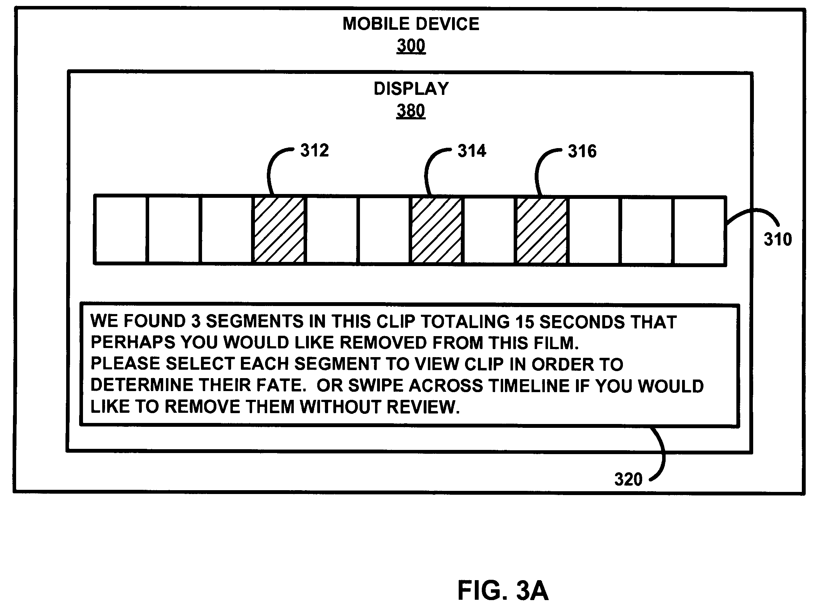

FIGS. 3A-3C illustrate example screens of a captured video presented to the user, in accordance with this disclosure. In this example, a user may utilize a video capture device that is incorporated into mobile device 300. The user may run the video capturing application and start recording a scene. While capturing the video, an event may cause the user to take an action that causes an interruption and/or distortion to the video capturing, e.g., drop the video capture device or place it face down while video is being captured. For example, the user may place the device down on a table, or may move his/her hand around, or may respond to a phone call, while the video capture device continues to capture video. Using techniques of this disclosure, as described in detail above, a processor (processor 66 of FIG. 1 and processors 166 and 172 of FIG. 2) may detect the interruption in the captured video. Events that cause the interruption in video may be detected during video capturing as different types of sensors provide image and/or sensor information to the processor indicating abrupt changes in the captured video. In this example, the user may have selected to review detected interruption and/or distortion portions in the captured video and make the decision as to whether to delete the detected portions.

As shown in FIG. 1A, mobile device 300 may display to the user the captured video via display 380, and may display the frames of the captured video as a sequence of thumbnails 310. The user may select thumbnails, which may correspond to single frames or a group of frames, e.g., a portion of the captured video corresponding to a scene. The selected thumbnail may then be displayed for viewing by the user. The user may select to view the thumbnails in any order, and may scroll through thumbnails 310 and skip to view only the marked portions, e.g., portions 312, 314, and 316. When a user selects a thumbnail, the corresponding frame(s) may be played back on display 380. Upon displaying the captured video in the edit mode, the user may be prompted with a message 320 regarding the marked portions 312, 314, and 316, which may have been detected as interruptions and/or distortions in the captured video. Message 320 may include instructions for the user to view and to determine what course of action to take for each of the segments, in accordance with the techniques discussed in this disclosure. In the example of FIG. 3A, message 320 may state "we found 3 segments in this clip totaling 15 seconds that perhaps you would like removed from this film. Please select each segment to view clip in order to determine their fate. Or swipe across timeline if you would like to remove them without review." The message displayed to the user may provide more or less information regarding the detected and marked portions. For example, the message may provide the user with further instructions regarding different editing options, e.g., delete, retain, or play back at a faster playback rate.

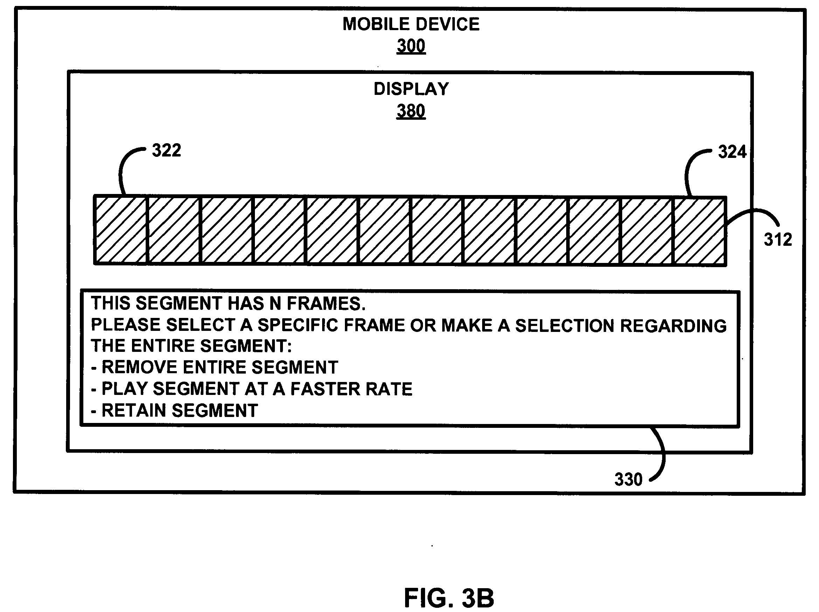

The user may select one of the marked portions of the captured video, for example, portion 312. As shown in FIG. 3B, upon selecting one of the portions, display 380 may present to the user the frames corresponding to the marked portion, defined by a starting frame 322 and ending frame 324. Display 380 may play the selected portion for the user, and prompt the user with options via message 330 to determine what to do with the portion. For example, message 330 may indicate the number of frames in the selected marked portion, and give the user the option to select a specific frame for editing, or to make an editing selection for the entire marked portion 312. In the example of FIG. 3B, message 330 may state "this segment has 'N' frames. Please select a specific frame or make a selection regarding the entire segment: remove entire segment, play segment at a fast rate, retain segment." In one example, where display 380 may be a touch screen display, the user may select an option by touching display 380 over the selection. In another example, the user may make a selection by using hard or soft keys corresponding to the listed selections.

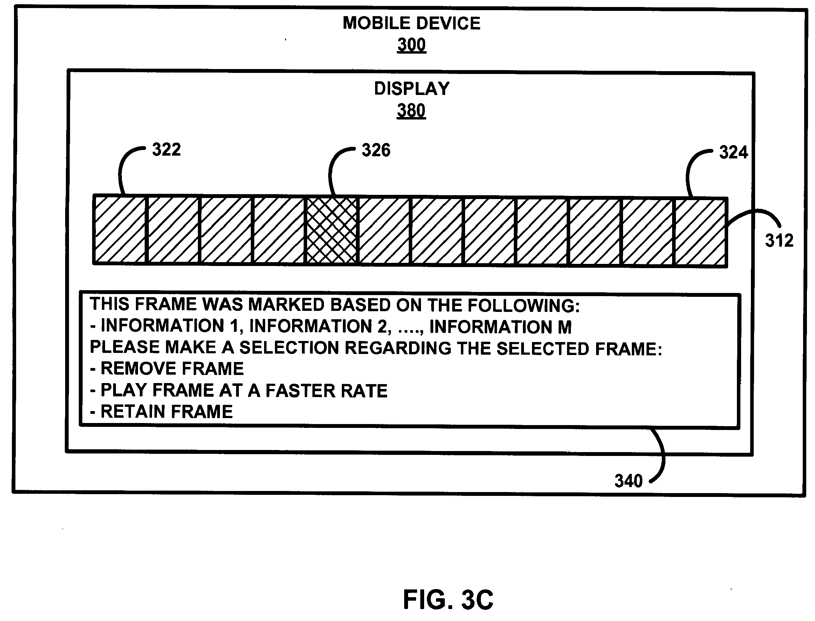

If the user selects a specific frame within marked portion 312, the frame may be highlighted and display 380 may prompt the user with options regarding the selected frame. As shown in FIG. 3C, the user may select frame 326 from the frames of marked portion 312. Upon selecting frame 326, display 380 may display message 340, prompting the user to select an editing option for the particular frame. In addition, message 340 may indicate the information associated with the selected frame, such as a time stamp, sensor information (orientation, direction, and the like), average brightness of the frame, auto white balance, and the like, based on which the frame was marked for removal. In the example of FIG. 3C, message 340 may state "this frame was marked based on the following: information 1, information 2, ..., information M. Please make a selection regarding the selected frame: remove frame, play frame at a faster rate, retain frame." Information 1, 2, ..., M, may correspond to information obtained during video capture for the selected frame, and may be image sensor information (e.g., brightness) and/or sensor information (e.g., orientation, direction).

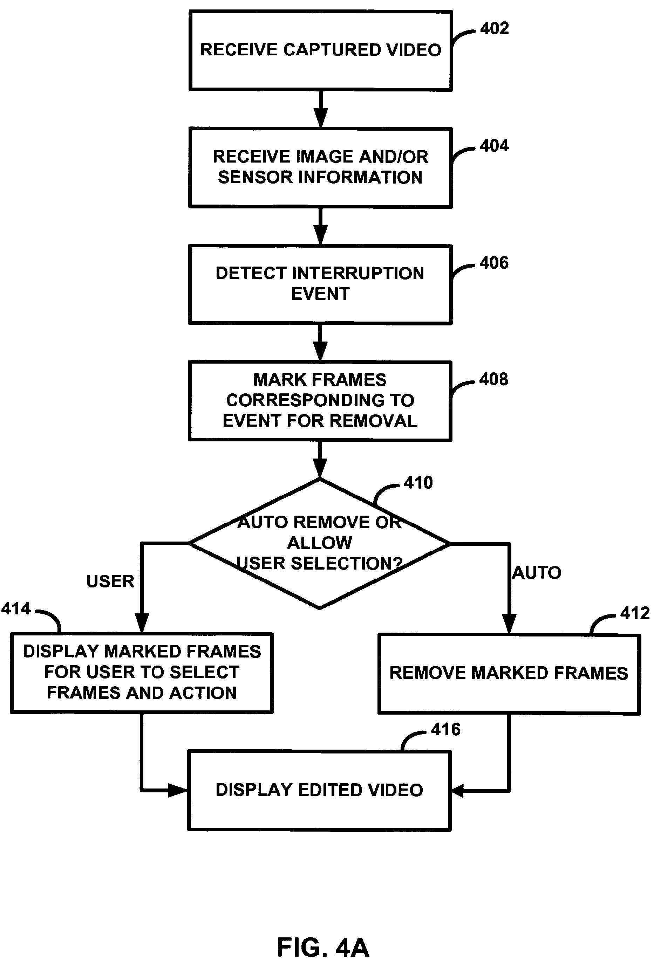

FIG 4A is a flow diagram illustrating video capturing and display using techniques of this disclosure. The process of FIG. 4A may be performed in a video system, e.g., video capture device 60 of FIG. 1, or video capture device 160 and mobile device 100 of FIG. 2. As shown in FIG. 4A, a video capture device may be capturing video and receiving captured video frames (402). As video capture device captures the frames, sensor and/or image information may be obtained based on data received from image sensors (e.g., image sensor 64) and other sensors available in the device (e.g., sensors and modules unit 70) (404). For example, an image sensor in the video capture device may provide image information such as, for example, brightness level in the image. Other sensors and modules may provide sensor information, which may be used to determine motion, orientation, and/or location information associated with the video capture device. The sensors may be, for example, an accelerometer, a compass, an audio sensor, and the like. The sensors may be part of the video capture device, or may be part of a device into which the video capture device is incorporated and may be used by other applications. Using the image and/or sensor information, which may be obtained for each frame, a processor may detect interruption events in the captured video (406). The interruption events may correspond to portions of the captured video that have transitions from a target scene that a user of the video capture device is trying to capture to a non-target scene that the user may not intend on capturing. The detected interruption events may be marked as possible portions of the captured video that may need to be subsequently deleted from the captured video.

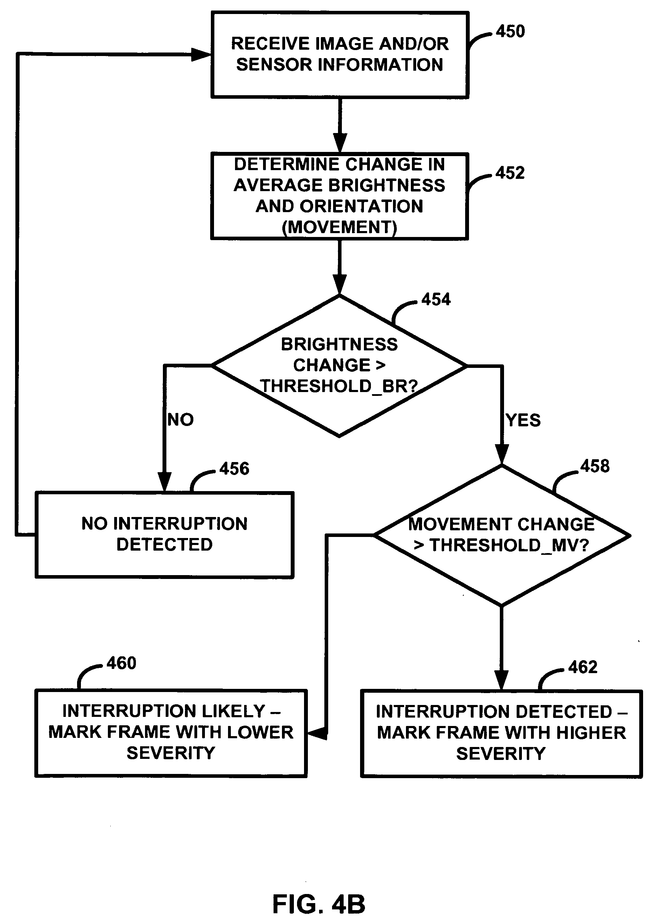

Interruption events may be detected using image information and/or sensor information. For example, image information such as brightness may be utilized to determine an average brightness of a frame, and change in average brightness from one frame to another may be utilized to detect an interruption, for example, when there is an abrupt and great change in average brightness from one frame to another. In another example, sensor information may be utilized to determine abrupt changes in direction, orientation, and/or location from one frame to another. In some examples, a combination of image information and sensor information may be utilized to more effectively detect interruption events in captured video. For example, an abrupt change in average brightness from one frame to another may indicate an interruption event, which may be further confirmed with an abrupt change in orientation between the same two frames. The detection of interruption event is described in an example in more detail below in FIG. 4B.

The processor (e.g., processor 66 of FIG. 1 or one of processors 166 and 172 of FIG. 2) may mark for removal frames corresponding to the identified interruption events/portions of the captured video (408). The frames may be, for example, frames during which the video capture device may be directed at a non-target scene and, therefore, capturing undesirable video such as, for example, a black scene if the video capture device is placed face down on a surface.

Based on the setup of the system, the video capture device may automatically determine what to do with the frames marked for removal or the captured video may be displayed for the user to determine what to do with the frames marked for removal (410). In one example, the system may be designed to automatically resolve the decision as to whether to remove the frame marked for removal. In another example, the user may select whether the system should automatically resolve the removal decision or whether the user should be allowed to make the decision.

In one example, if the system setup is such that the video capture device automatically determines whether to remove the marked frames, the processor may determine which, if any, of the marked frames to remove (412). In one example, the processor may remove any marked frame. In another example, the processor may determine a level of severity associated with the frames marked for removal, where the severity may be based on several factors such as, for example, the amount of change associated with the transition from the target scene to the non-target scene, the number of frames during the transition (i.e., before the captured video returns to the target scene), and historical data associated with the user's tendencies in frame removal. Based on at least some of these factors, the processor may determine to remove a marked frame, play back the marked frame at a faster playback rate than the playback rate of the captured video, or retain the marked frame.

In another example, if the system setup is such that the user makes a selection to determine whether to remove marked frame, the processor may display the captured video for the user, with the frames marked for removal displayed to the user with a list of actions from which the user selects what to do with a marked frame (414). For each portion of the captured video, the user may be prompted with the marked frames and a list of actions such as, for example, remove the frame, retain the frame, or display the frame at a faster playback rate than the playback rate of the captured video. The frames may be displayed with an indication of a severity level indication, as discussed above.

The processor may then edit and display the captured video based on the determination by the processor and/or by the user selections, by removing frames that need to be removed, retaining frames that do not need to be removed, and displayed frames marked for a faster playback rate at a faster playback rate (416).

FIG. 4B is a flow diagram illustrating interruption detection using techniques of this disclosure. The process of FIG. 4B may be performed in a video system, e.g., video capture device 60 of FIG. 1, or video capture device 160 and mobile device 100 of FIG. 2. In the example of FIG. 4B, image information and sensor information may be obtained for a captured video, based on data received from image sensors (e.g., image sensor 64) and other sensors available in the device (e.g., sensors and modules unit 70). For example, an image sensor in the video capture device may provide image information, such as brightness level in the image. Other sensors and modules may provide sensor information, which may be used to determine motion information, e.g., amount of movement in a frame relative to the previous frame. Interruption events may be detected using image information and/or sensor information, such as brightness and/or movement. A processor may receive the image and sensor information (450). In this example, the processor may utilize brightness and movement information obtained by an image sensor and an accelerometer. The processor may then determine the amount of change in average brightness and the change in orientation of a frame compared to the previous frame (452). The change in orientation may be indicative of the amount of movement from one frame to another. The processor may then determine if the amount of change in average brightness exceeds a threshold of change in average brightness (threshold_br) (454). If the change in average brightness does not exceed the threshold, the processor may determine that interruption in the captured video is not detected at the current frame (456) and proceed to the next frame. If the change in average brightness exceeds the threshold, the processor may determine if the amount of change in movement exceeds a threshold of change in movement (threshold_mv) (458). If the change in average movement does not exceed the threshold, the processor may determine that interruption in the captured video is likely, but may assign a lower severity to the interruption or test other factors (e.g., direction, auto white balance, or the like) (460). If the change in average movement exceeds the threshold, the processor may determine that interruption in the captured video is detected at the current frame and mark the frame with an interruption indicator (462).

In one example, if a previous frame has been marked, indicating detection of an interruption portion in the captured video, a subsequent frame corresponding to a detected interruption may be marked as the ending frame of the interruption portion. The processor may set and reset an interruption flag, and based on the value of the flag, the processor may determine whether a detected interruption frame is the beginning frame or the ending frame of an interruption portion. In another example, the processor may determine whether the change in movement exceeds threshold_mv, and confirm detected interruption by determining whether the change in average brightness exceeds threshold_br. It should be understood that brightness and movement are one combination of frame information that may be used to detect interruption in captured video, and in other examples, additional or other sensor information may be utilized to confirm the detected interruption.

The techniques described in this disclosure may be utilized in a device to assist in the functionalities of a video encoding device, or may be utilized separately as required by the device and the applications for which the device may be used. In one example, the techniques of this disclosure may be utilized to allow the user to mark certain portions of a captured video during video capture. For example, if the use wants to remove a certain portion, but does not want to stop recording, the user may purposely shake the computing device during video capture so that the corresponding portion may be marked, and the user may edit it out without having to manually search through the captured video. In another example, the user may create an interruption to mark a "good moment" that the user may want to more easily find. In another example, the computing device may provide an option that allows the user to mark portions of the video during video capture, to mark portions that the user may wish to find more easily during video editing and/or video playback.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware, firmware, and/or software components, or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause one or more programmable processors, or other processors, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

In an exemplary implementation, techniques described in this disclosure may be performed by a digital video coding hardware apparatus, whether implemented in part by hardware, firmware and/or software.

Various aspects and examples have been described. However, modifications can be made to the structure or techniques of this disclosure without departing from the scope of the following claims.

## Claims

1. A method comprising:
detecting, by a video processing device, a transition of video captured by the video processing device from a target scene to a non-target scene based on at least one of: 1) a change in a direction in which the video processing device is facing, 2) a change in an orientation associated with the video processing device, 3) a change in an audio level associated with the captured video, and 4) a change in an average brightness associated with the captured video;
marking, by the video processing device, one or more portions of the captured video for editing based on the detected transition; and,
selecting, by the video processing device, for the marked one or more portions, a faster playback rate than a playback rate associated with the captured video.

2. The method of claim 1, further comprising automatically editing the marked one or more portions.

3. The method of claim 1, wherein detecting the transition comprises detecting the transition based on signals sensed by one or more sensors.

4. The method of claim 3, wherein the one or more sensors comprise at least one of an accelerometer, an image sensor, an audio sensor, and a compass.

5. The method of claim 1, wherein detecting the transition based on the change in the average brightness level further comprises:
obtaining, by the video processing device, a first set of pixel luma values associated with a first frame of the captured video and a second set of pixel luma values associated with a second frame of the captured video;
determining, by the video processing device, an average brightness of the first frame based on the first set of pixel luma values and an average brightness of the second frame based on the second set of pixel luma values; and
determining the change in the average brightness level based on the average brightness of the first frame and the average brightness of the second frame.

6. The method of claim 1, further comprising:
determining a severity level associated with the detected transition with respect to the one or more marked portions; and
selecting the one or more marked portions based on the severity level associated with the one or more marked portions.

7. The method of claim 1, wherein detecting the transition of the captured video from the target scene to the non-target scene is based at least in part on a first position associated with the target scene and a second position associated with the non-target scene.

8. The method of claim 1, wherein:
at least one of the change in the direction and the change in the orientation is based on at least one of 1) information associated with the video processing device and relative to one or both magnetic poles of the earth, 2) one or more altitudes associated with the video processing device, 3) audio input received by the video processing device, and 4) a change in an amount of ambient light detected by the video processing device; and
the change in the audio level is based on comparing a received audio input with a previously received audio input.

9. A computer-readable medium comprising instructions for causing a programmable processor in a video processing device to perform the method according to any one of the preceding claims.

10. A video processing device comprising:
means for detecting a transition of captured video from a target scene to a non-target scene based on at least one of: 1) a change in a direction in which the video processing device is facing, 2) a change in an orientation associated with the video processing device, 3) a change in an audio level associated with the captured video, and 4) a change in an average brightness associated with the captured video;
means for marking one or more portions of the captured video for editing based on the detected transition; and
means for selecting, for the marked one or more portions, a faster playback rate than a playback rate associated with the captured video.

11. The device of claim 10, further comprising one or more sensors that sense signals, wherein the video processing device detects the transition based on signals sensed by the one or more sensors.

12. The device of claim 11, wherein the one or more sensors comprises at least one of an accelerometer, an image sensor, an audio sensor, and a compass.

13. The device of claim 10, wherein the at least one video processing device is arranged to:
obtain a first set of pixel luma values associated with a first frame of the captured video and a second set of pixel luma values associated with a second frame of the captured video;
determine an average brightness of the first frame based on the first set of pixel luma values and an average brightness of the second frame based on the second set of pixel luma values; and
determine the change in the average brightness level based on the average brightness of the first frame and the average brightness of the second frame.

14. The device of claim 13, further comprising:
a processor that determines a severity level associated with the detected transition with respect to the one or more marked portions; and
wherein selection the one or more marked portions is based on the severity level associated with the one or more marked portions.

15. The device of claim 10, wherein the video processing device comprises a video capture device or a computing device capable of editing video.

## Patentansprüche

1. Verfahren, das Folgendes beinhaltet:
Erkennen, mit einem Videoverarbeitungsgerät, eines Übergangs von von dem Videoverarbeitungsgerät erfasstem Video von einer Zielszene zu einer Nicht-Zielszene auf der Basis von wenigstens einem der Folgenden: 1) einer Änderung der Richtung, in die das Videoverarbeitungsgerät zeigt, 2) einer Änderung einer mit dem Videoverarbeitungsgerät assoziierten Orientierung, 3) einer Änderung des mit dem erfassten Video assoziierten Tonpegels, und 4) einer Änderung einer mit dem erfassten Video assoziierten durchschnittlichen Helligkeit;
Markieren, durch das Videoverarbeitungsgerät, eines oder mehrerer Teile des erfassten Videos zur Bearbeitung auf der Basis des erkannten Übergangs; und
Auswählen, durch das Videoverarbeitungsgerät, für die markierten ein oder mehreren Teile, einer höheren Wiedergaberate als eine mit dem erfassten Video assoziierte Wiedergaberate.

2. Verfahren nach Anspruch 1, das ferner das automatische Bearbeiten der markierten ein oder mehreren Teile beinhaltet.

3. Verfahren nach Anspruch 1, wobei das Erkennen des Übergangs das Erkennen des Übergangs auf der Basis von von einem oder mehreren Sensoren erfassten Signalen beinhaltet.

4. Verfahren nach Anspruch 3, wobei die ein oder mehreren Sensoren wenigstens eines aus einem Beschleunigungsmesser, einem Bildsensor, einem Tonsensor und einem Kompass umfassen.

5. Verfahren nach Anspruch 1, wobei das Erkennen des Übergangs auf der Basis der Änderung des durchschnittlichen Helligkeitsniveaus ferner Folgendes beinhaltet:
Einholen, durch das Videoverarbeitungsgerät, eines mit einem ersten Frame des erfassten Videos assoziierten ersten Satzes von Pixel-Luma-Werten und eines mit einem zweiten Frame des erfassten Videos assoziierten zweiten Satzes von Pixel-Luma-Werten;
Bestimmen, durch das Videoverarbeitungsgerät, einer durchschnittlichen Helligkeit des ersten Frame auf der Basis des ersten Satzes von Pixel-Luma-Werten oder einer durchschnittlichen Helligkeit des zweiten Frame auf der Basis des zweiten Satzes von Pixel-Luma-Werten; und
Bestimmen der Änderung des durchschnittlichen Helligkeitsniveaus auf der Basis der durchschnittlichen Helligkeit des ersten Frame und der durchschnittlichen Helligkeit des zweiten Frame.

6. Verfahren nach Anspruch 1, das ferner Folgendes beinhaltet:
Bestimmen eines mit dem erkannten Übergang assoziierten Schweregrads mit Bezug auf die ein oder mehreren markierten Teile; und
Auswählen der ein oder mehreren markierten Teile auf der Basis des mit den ein oder mehreren markierten Teilen assoziierten Schweregrads.

7. Verfahren nach Anspruch 1, wobei das Erkennen des Übergangs des erfassten Videos von der Zielszene zu der Nicht-Zielszene wenigstens teilweise auf einer mit der Zielszene assoziierten ersten Position und einer mit der Nicht-Zielszene assoziierten zweiten Position basiert.

8. Verfahren nach Anspruch 1, wobei:
die Richtungsänderung und/oder die Orientierungsänderung wenigstens auf einem der Folgenden basiert: 1) mit dem Videoverarbeitungsgerät assoziierten Informationen und mit Bezug auf einen oder beide Magnetpole der Erde, 2) einer oder mehreren mit dem Videoverarbeitungsgerät assoziierten Höhen, 3) von dem Videoverarbeitungsgerät empfangenem Tonausgang, und 4) einer Änderung der von dem Videoverarbeitungsgerät erkannten Umgebungslichtmenge; und
die Änderung des Tonpegels auf einem Vergleich eines empfangenen Toneingangs mit einem zuvor empfangenen Toneingang basiert.

9. Computerlesbares Medium, das Befehle umfasst, um zu bewirken, dass ein programmierbarer Prozessor in einem Videoverarbeitungsgerät das Verfahren nach einem der vorherigen Ansprüche ausführt.

10. Videoverarbeitungsgerät, das Folgendes umfasst:
Mittel zum Erkennen eines Übergangs von erfasstem Video von einer Zielszene zu einer Nicht-Zielszene auf der Basis von wenigstens einem der Folgenden: 1) einer Änderung einer Richtung, in die das Videoverarbeitungsgerät zeigt, 2) einer Änderung einer mit dem Videoverarbeitungsgerät assoziierten Orientierung, 3) einer Änderung eines mit dem erfassten Video assoziierten Tonpegels, und 4) einer Änderung einer mit dem erfassten Video assoziierten durchschnittlichen Helligkeit;
Mittel zum Markieren von einem oder mehreren Teilen des erfassten Videos zur Bearbeitung auf der Basis des erkannten Übergangs; und
Mittel zum Auswählen, für die markierten ein oder mehreren Teile, einer höheren Wiedergaberate als eine mit dem erfassten Video assoziierte Wiedergaberate.

11. Gerät nach Anspruch 10, das ferner einen oder mehrere Sensoren umfasst, die Signale erfassen, wobei das Videoverarbeitungsgerät den Übergang auf der Basis von von den ein oder mehreren Sensoren erfassten Signalen erkennt.

12. Gerät nach Anspruch 11, wobei die ein oder mehreren Sensoren wenigstens eines aus einem Beschleunigungsmesser, einem Bildsensor, einem Tonsensor und einem Kompass umfasst.

13. Gerät nach Anspruch 10, wobei das wenigstens eine Videoverarbeitungsgerät ausgelegt ist zum:
Einholen eines mit einem ersten Frame des erfassten Videos assoziierten ersten Satzes von Pixel-Luma-Werten und eines mit einem zweiten Frame des erfassten Videos assoziierten zweiten Satzes von Pixel-Luma-Werten;
Bestimmen einer durchschnittlichen Helligkeit des ersten Frame auf der Basis des ersten Satzes von Pixel-Luma-Werten und einer durchschnittlichen Helligkeit des zweiten Frame auf der Basis des zweiten Satzes von Pixel-Luma-Werten; und
Bestimmen der Änderung des durchschnittlichen Helligkeitsniveaus auf der Basis der durchschnittlichen Helligkeit des ersten Frame und der durchschnittlichen Helligkeit des zweiten Frame.

14. Gerät nach Anspruch 13, das ferner Folgendes umfasst:
einen Prozessor, der einen mit dem erkannten Übergang assoziierten Schweregrad mit Bezug auf die ein oder mehreren markierten Teile bestimmt; und
wobei die Auswahl der ein oder mehreren markierten Teile auf dem mit den ein oder mehreren markierten Teilen assoziierten Schweregrad basiert.

15. Gerät nach Anspruch 10, wobei das Videoverarbeitungsgerät ein Videoerfassungsgerät oder ein zum Bearbeiten von Video fähiges Computergerät umfasst.

## Revendications

1. Procédé comprenant :
la détection, par un dispositif de traitement vidéo, d'une transition d'une vidéo capturée par le dispositif de traitement vidéo d'une scène cible à une scène non cible en fonction au moins de l'un d'un : 1) changement d'un sens dans lequel le dispositif de traitement vidéo est tourné, 2) changement d'une orientation associée au dispositif de traitement vidéo, 3) changement d'un niveau audio associé à la vidéo capturée et 4) changement d'une luminosité moyenne associée à la vidéo capturée ;
le repérage, par le dispositif de traitement vidéo, d'une ou de plusieurs parties de la vidéo capturée en vue de leur édition en fonction de la transition détectée ; et,
la sélection, par le dispositif de traitement vidéo, pour les une ou plusieurs parties marquées, d'une vitesse de reproduction plus rapide qu'une vitesse de reproduction associée à la vidéo capturée.

2. Procédé selon la revendication 1, comprenant en outre l'édition automatique des une ou plusieurs parties repérées.

3. Procédé selon la revendication 1, dans lequel la détection de la transition comprend la détection de la transition en fonction de signaux détectés par plusieurs capteurs.

4. Procédé selon la revendication 3, dans lequel les un ou plusieurs capteurs comprennent au moins l'un d'un accéléromètre, d'un capteur d'image, d'un capteur audio et d'une boussole.

5. Procédé selon la revendication 1, dans lequel la détection de la transition en fonction du changement de niveau de luminosité moyenne comprend en outre :
l'obtention, par le dispositif de traitement vidéo, d'un premier ensemble de valeurs de luminance de pixels associé à une première trame de la vidéo capturée et d'un second ensemble de valeurs de luminance de pixels associé à une seconde trame de la vidéo capturée ;
la détermination, par le dispositif de traitement vidéo, d'une luminosité moyenne de la première trame en fonction du premier ensemble de valeurs de luminance de pixels et d'une luminosité moyenne de la seconde trame en fonction du second ensemble de valeurs de luminance de pixels ; et
la détermination du changement du niveau de luminosité moyenne en fonction de la luminosité moyenne de la première trame et de la luminosité moyenne de la seconde trame.

6. Procédé selon la revendication 1, comprenant en outre :
la détermination d'un niveau de gravité associé à la transition détectée relativement aux une ou plusieurs positions repérées ; et
la sélection des une ou plusieurs parties repérées en fonction du niveau de gravité associé aux une ou plusieurs parties repérées.

7. Procédé selon la revendication 1, dans lequel la détection de la transition de la vidéo capturée de la scène cible à la scène non cible est basée au moins en partie sur une première position associée à la scène cible et une seconde position associée à la scène non cible.

8. Procédé selon la revendication 1, dans lequel :
au moins l'un du changement de sens et du changement d'orientation est basé sur au moins l'un 1) d'informations associées au dispositif de traitement vidéo et relatives à un ou aux deux pôles magnétiques de la Terre, 2) d'une ou de plusieurs altitudes associées au dispositif de traitement vidéo, 3) d'une entrée audio reçue par le dispositif de traitement vidéo, et 4) d'un changement d'une quantité de lumière ambiante détecté par le dispositif de traitement vidéo ; et
le changement de niveau audio est basé sur la comparaison d'une entrée audio reçue à une entrée audio reçue antérieurement.

9. Support lisible par ordinateur comprenant des instructions pour amener un processeur programmable dans un dispositif de traitement vidéo à exécuter le procédé selon l'une quelconque des revendications précédentes.

10. Dispositif de traitement vidéo comprenant :
un moyen de détection d'une transition d'une vidéo capturée d'une scène cible à une scène non cible en fonction au moins de l'un d'un : 1) changement d'un sens dans lequel le dispositif de traitement vidéo est tourné, 2) changement d'une orientation associée au dispositif de traitement vidéo, 3) changement d'un niveau audio associé à la vidéo capturée et 4) changement d'une luminosité moyenne associée à la vidéo capturée ;
un moyen de repérage d'une ou de plusieurs parties de la vidéo capturée en vue de leur édition en fonction de la transition détectée ; et,
un moyen de sélection, pour les une ou plusieurs parties marquées, d'une vitesse de reproduction plus rapide qu'une vitesse de reproduction associée à la vidéo capturée.

11. Dispositif selon la revendication 10, comprenant en outre un ou plusieurs capteurs qui détectent des signaux, le dispositif de traitement vidéo détectant la transition en fonction de signaux détectés par les un ou plusieurs capteurs.

12. Dispositif selon la revendication 11, dans lequel les un ou plusieurs capteurs comprennent au moins l'un d'un accéléromètre, d'un capteur d'image, d'un capteur audio et d'une boussole.

13. Dispositif selon la revendication 10, dans lequel l'au moins un dispositif de traitement vidéo est agencé pour :
obtenir un premier ensemble de valeurs de luminance de pixels associé à une première trame de la vidéo capturée et un second ensemble de valeurs de luminance de pixels associé à une seconde trame de la vidéo capturée ;
déterminer une luminosité moyenne de la première trame en fonction du premier ensemble de valeurs de luminance de pixels et une luminosité moyenne de la seconde trame en fonction du second ensemble de valeurs de luminance de pixels ; et
déterminer le changement du niveau de luminosité moyenne en fonction de la luminosité moyenne de la première trame et de la luminosité moyenne de la seconde trame.

14. Dispositif selon la revendication 13, comprenant en outre :
un processeur qui détermine un niveau de gravité associé à la transition détectée relativement aux une ou plusieurs positions repérées ; et
dans lequel la sélection des une ou plusieurs parties repérées est basée sur le niveau de gravité associé aux une ou plusieurs parties repérées.

15. Dispositif selon la revendication 10, dans lequel le dispositif de traitement vidéo comprend un dispositif de capture vidéo ou un dispositif informatique capable d'édition vidéo.
